Europäisches Patentamt

(19) European Patent Office　(11) Numéro de publication: **0 111 428**

Office européen des brevets　　　　　　　　　　　**B1**

⑫　　　　　**FASCICULE DE BREVET EUROPÉEN**

(45) Date de publication du fascicule du brevet:　　　(51) Int. Cl.⁴: **B 23 K 9/02, B 23 K 37/04**
　05.11.86

(21) Numéro de dépôt: **83402140.4**

(22) Date de dépôt: **04.11.83**

(54) **Machine pour la mise en place et le soudage des fonds et brise-lames dans la virole d'un réservoir ou citerne.**

(30) Priorité: **05.11.82 FR 8218963**

(43) Date de publication de la demande:
　**20.06.84 Bulletin 84/25**

(45) Mention de la délivrance du brevet:
　**05.11.86 Bulletin 86/45**

(84) Etats contractants désignés:
　**BE DE GB IT NL**

(56) Documents cité:
　**FR-A-2 069 845**
　**FR-A-2 098 828**
　**FR-A-2 474 368**
　**US-A-1 550 651**
　**US-A-1 983 321**
　**US-A-2 618 727**

(73) Titulaire: **FRUEHAUF FRANCE S.A., 2 avenue de l'Aunette, F-91130 Ris Orangis (FR)**

(72) Inventeur: **Berard- Neyret, Jean, 3, avenue du Berry, F-89000 St. Georges (FR)**
　Inventeur: **Fournier, André, Darelèmes Saint- Martin- du- Fouilloux, F-79420 Reffannes (FR)**
　Inventeur: **Feix, Jacques, 57, rue du Docteur Emile Roux, F-79200 Parthenay (FR)**
　Inventeur: **Vestier, Jean- Maris, 30, rue Yann Palach, F-79200 Parthenay (FR)**

(74) Mandataire: **Boivin, Claude, 9, rue Edouard- Charton, F-78000 Versailles (FR)**

LIBER, STOCKHOLM 1986

## Description

Les citernes ou réservoirs pour le transport et le stockage de produits liquides sont constitués par une virole cylindrique ou elliptique aux extrémités de laquelle des fonds sont soudés, des brise-lames et/ou des fonds auxiliaires pouvant éventuellement être soudés en des endroits intermédiaires de la virole.

Jusqu'à présent la mise en place et la soudure des fonds et des brise-lames étaient généralement effectués à la main. Ces opérations étaient longues et étaient une gêne pour le voisinage, car elles étaient très bruyantes.

Le brevet FR-A-2 069 845 décrit une machine pour assurer cette mise en place et la soudure d'un fond à l'extrémité d'une virole.

La présente invention a pour objet une machine qui remédie à ces inconvénients et permet de mettre en place et de souder les fonds et brise-lames des citernes et réservoirs à l'intérieur de viroles déjà confectionnées.

La machine selon l'invention est caractérisée en ce qu'elle comprend au moins un bâti par rapport auquel est monté pivotant un support pour un plateau tournant muni de moyens de maintien d'une virole, de façon à pouvoir occuper, soit une position verticale, soit une position dans laquelle il est horizontal et repose sur le bâti, un dispositif d'emmanchement des fonds et brise-lames qui est mobile par rapport au bâti et peut occuper soit une position située à la verticale du bâti, soit une position située à la verticale d'un emplacement de dépose des fonds et brise-lames, ce dispositif comprenant un bâti auxiliaire par rapport auquel est mobile verticalement un plateau d'emmanchement portant des moyens de prise et d'emmanchement des fonds et brise-lames, et une installation de soudure des fonds et brise-lames qui est mobile par rapport au bâti et peut occuper une position située à la verticale du bâti, cette installation comprenant un support par rapport auquel est mobile verticalement une tête de soudure.

Pour utiliser cette machine, on engage une virole placée de manière à avoir son axe horizontal dans les organes de maintien du plateau placé verticalement. Puis on fait pivoter le support de ce plateau de manière qu'il vienne reposer sur le bâti. A l'aide du dispositif d'emmanchement des fonds et brise-lames, on vient prendre un fond ou un brise-lames situé à l'emplacement de dépose et on l'amène à la verticale de la virole. Puis, on déplace vers le bas le plateau d'emmanchement jusqu'à ce que le fond ou le briselames se trouve qu'à la hauteur désirée dans la virole. Il ne reste plus ensuite qu'à remonter le plateau d'emmanchement et à le déplacer de façon à libérer l'espace situé au droit de la virole, à amener l'installation de soudure en regard de cette virole et à souder le fond ou le brise-lames mis en place en faisant pivoter le plateau tournant.

Il y a avantage à ce que les dimensions extérieures du fond ou du brise-lames soit légèrement supérieures aux dimensions intérieures de la virole, ce qui permet par effet de serrage le maintien en position du fond ou du brise-lames avant sa soudure, malgré des tolérances dans les dimensions du fond ou brise-lames.

Selon une caractéristique complémentaire de l'invention, qui permet un emmanchement aisé du fond ou du brise-lames malgré cette différence dimensionnelle, le plateau d'emmanchement est articulé autour d'un axe horizontal sur un support mobile verticalement par rapport au bâti du dispositif d'emmanchement et la machine comporte un moteur tel qu'un vérin propre à faire pivoter le plateau par rapport au support.

Lors de l'emmanchement du fond ou du brise-lames on dispose obliquement le plateau et le fond ou brise-lames qu'il porte de sorte que l'emmanchement se fait facilement et que tout arrachement du métal de la virole est évité. Puis, lorsque le fond ou le brise-lames se trouve à proximité de la position qu'il doit occuper, on fait basculer le plateau pour le ramener en position horizontale. Le fond ou le brise-lames se trouve ainsi dans la position correcte, perpendiculaire à l'axe de la virole.

Dans un mode de réalisation avantageux de l'invention, la machine comporte deux bâtis à chacun desquels est associé un plateau tournant et son support, et le dispositif d'emmanchement ainsi que l'installation de soudure sont disposés de manière à pouvoir être amenés à volonté à la verticale de l'un ou de l'autre des bâtis. On peut ainsi procéder à la soudure d'un fond ou d'un brise-lames dans une virole reposant sur l'un des bâtis pendant que simultanément on met en place un fond ou un brise-lames dans une seconde virole reposant sur l'autre bâti.

Dans ce cas, le dispositif d'emmanchement des fonds peut être porté par une poutre qui-est montée pivotante par rapport à un support fixe autour d'un axe vertical équidistant des deux bâtis et de l'emplacement de dépose des fonds et brise-lames. De son côté, l'installation de soudure peut être montée mobile sur une poutre s'étendant dans un plan vertical parallèle au plan des axes des bâtis.

Lorsque les fonds sont mis en place, la citerne doit contenir un volume donné de liquide. Lorsque cette citerne comporte des fonds intermédiaires, le volume de chacun des compartiments délimités par deux fonds successifs doit également avoir un volume donné. La position des fonds par rapport à la virole doit donc être déterminée de manière précise. Or, du fait des tolérances de fabrication, le volume de liquide que peut contenir un fond, est relativement variable; par ailleurs, la forme géométrique du tombé de quart du fond n'est pas rigoureusement constante.

La présente invention a également pour objet un procédé pour la mise en place des fonds et brise-lames à l'aide de la machine décrite ci-dessus qui permet de rendre automatique le fonctionnement de cette machine.

Ce procédé est caractérisé en ce qu'on choisit pour la machine un niveau de référence avec lequel on fait coïncider initialement un niveau de référence du plateau d'emmanchement, en ce que, pour chaque fond, on détermine d'une part, une cote de jaugeage en plaçant dans le fond un volume déterminé de liquide et en mesurant l'écart moyen entre le niveau du liquide et le bord supérieur du fond, et une cote de forme en mesurant l'écart moyen entre le bord supérieur du fond et le niveau de référence du plateau d'emmanchement lorsque le fond est pressé contre lui, et en ce qu'on descend le plateau d'emmanchement de façon que la distance de son niveau de référence au niveau de référence de la machine corresponde au volume de liquide que doit délimiter le fond, compte tenu de la cote de jaugeage et de la cote de forme de ce fond.

On a décrit ci-après, à titre d'exemple non limitatif, un mode de réalisation de la machine selon l'invention, avec référence aux dessins annexés dans lesquels:

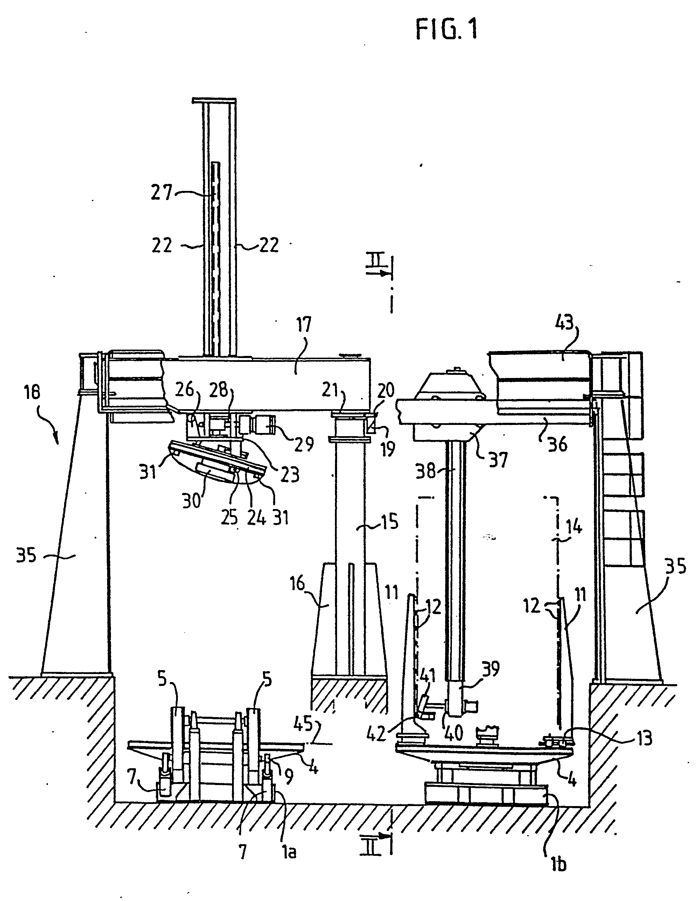

La Figure 1 est une vue en élévation de la machine avec arrachement partiel;

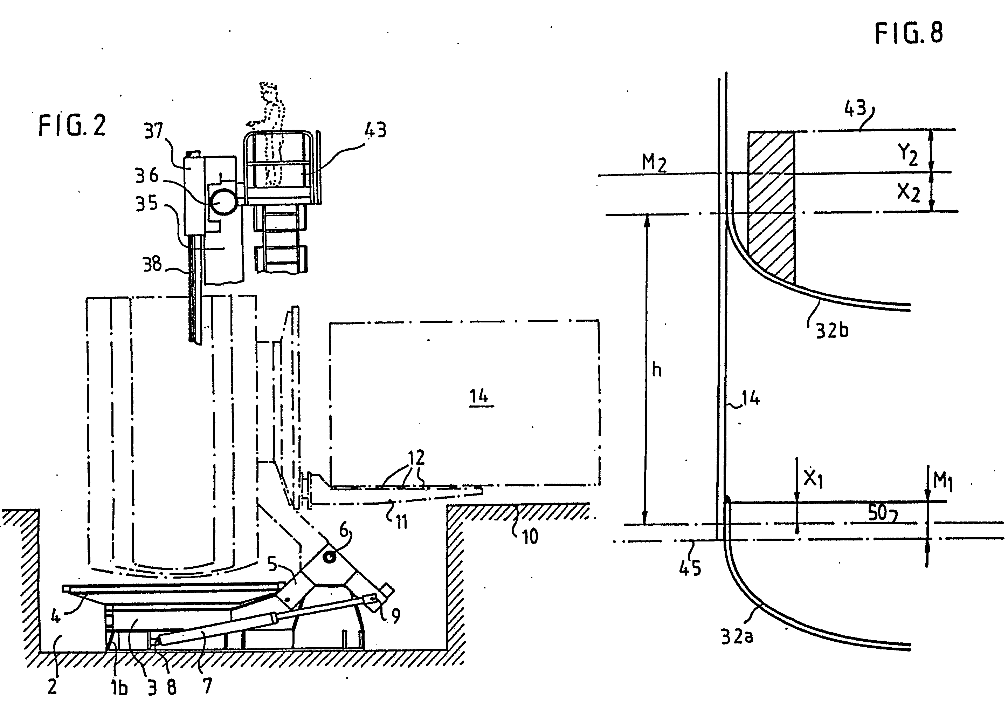

La Figure 2 en est une coupe verticale suivant II-II de la Figure 1;

La Figure 3 en est une vue en plan;

Les Figures 4 à 8 sont des schémas montrant comment est déterminée la position que doit occuper un fond.

Telle qu'elle est représentée au dessin, la machine selon l'invention comprend deux bâtis mécano-soudés 1a et 1b qui sont chacun scellés au fond d'une fosse 2a ou 2b et sur chacun desquels peut s'appliquer un support 3 pour un plateau tournant 4. Ce support enferme un moteur non visible au dessin et permettant de faire tourner le plateau 4. Il est porté par deux bras 5 qui sont montés pivotants autour d'un axe 6 sur le bâti 1a ou 1b correspondant. Deux vérins 7 articulés en 8 sur le bâti 1 et en 9 sur le bras 5 adjacent permettent d'amener le support 3, soit dans une position dans laquelle il est horizontal et repose sur le bâti 1a ou 1b, soit dans une position verticale dans laquelle son bord inférieur est sensiblement de niveau avec le sol 10 du local dans lequel est disposée la machine.

Des bras 11 munis de rouleaux 12 et orientés perpendiculairement u plateau 4 sont montés sur ce dernier par l'intermédiaire d'un dispositif 13 permettant de les déplacer radialement. Une virole 14 reposant sur le sol 10 peut être amenée entre les bras 11 du plateau, lorsque celui-ci est en position verticale, ces bras ayant été préalablement réglés en fonction du diamètre de la virole. Les vérins 7 sont ensuite actionnés pour amener la virole en position verticale.

Un fût 15 repose sur une platine de scellement et de mise à niveau 16 à égale distance des deux bâtis 1a et 1b. Il porte à sa partie supérieure une poutre pivotante 17 dont l'extrémité libre peut être ancrée au bâti d'un portique de soudage 18 et qui supporte un dispositif d'emmanchement des fonds et brise-lames. Le fût 15 porte un moteur 19 sur l'arbre duquel est fixé un pignon 20. Celui-ci est en prise avec une couronne dentée 21 fixée sur la poutre 17 coaxialement à son pivot. Le moteur 19 permet ainsi de faire pivoter la poutre 17 par rapport au fût 15.

Le dispositif d'emmanchement des fonds et brise-lames est disposé de manière à pouvoir être amené dans l'axe de chacun des deux bâtis 1a et 1b par pivotement de la poutre 17. Ce dispositif comporte deux colonnes de guidage verticales 22 qui sont montées coulissantes dans la poutre 17 et portent à leur partie inférieure un support 23 sur lequel un plateau d'emmanchement 24 est articulé autour d'un axe horizontal 25. Un vérin schématisé en 26 permet de faire basculer le plateau 24 autour de l'axe 25. Le support 23 est solidaire d'une vis verticale 27 fixe en rotation et montée dans un écrou qui est relié à l'arbre 28 d'un moteur électrique 29. Le fonctionnement de ce moteur a ainsi pour effet de déplacer verticalement le support 23 avec son plateau 24. Ce dernier porte en son centre une ventouse 30 reliée à une source de vide non représentée et à ses bords un outillage d'emmanchement 31 à la forme des fonds et brise-lames 32 à mettre en place.

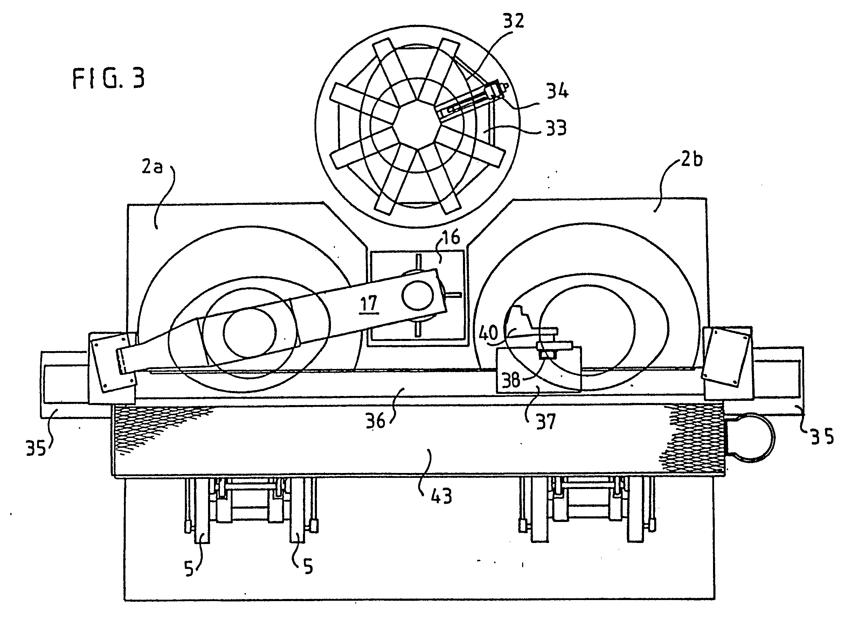

Un ensemble 33 pour la dépose des fonds et des brise-lames 32 est prévu à égale distance des deux bâtis 1a et 1b, l'axe de cet ensemble étant situé à une distance de l'axe du fût 15, égale à celle séparant cet axe des axes des bâtis 1a et 1b. L'ensemble 33 comporte des enclumes de référence 34 dont une seule est représentée à la Figure 3.

Le portique de soudage 18 est formé de deux paliers 35 supportant une poutre 36, qui s'étend dans un plan vertical parallèle au plan des axes des bâtis 1a et 1b. Sur cette poutre est monté coulissant un chariot de soudage 37 motorisé par un moto-réducteur non représenté. Dans ce chariot est monté mobile verticalement un fût 38 qui porte à sa partie inférieure un chariot 39 réglable verticalement. Un deuxième chariot 40 est réglable horizontalement par rapport au chariot 39 et porte une tête de soudage 41 et un palpeur 42.

La référence 43 désigne une passerelle porte-opérateur du portique de soudage 18.

Le fonctionnement général de la machine qui vient d'être décrite est très simple. Une virole 14 ayant préalablement été amenée par exemple sur le plateau 4 reposant sur le bâti 1a, et un fond 32 ayant été posé sur l'ensemble 33, on fait pivoter la poutre 17 de façon que le plateau 24 se trouve à la verticale de l'ensemble 33, on descend ce plateau après l'avoir amené en position horizontale et on vient prendre le fond 32 à l'aide de la ventouse 30. On remonte l'ensemble plateau-fond, puis on fait pivoter la poutre 17 et on amène le plateau 24 avec le fond 32 à la verticale du bâti 1a. On fait basculer le plateau 24 par manoeuvre du vérin 26 et on descend l'ensemble dans la virole 14, jusqu'à ce que le fond se trouve à la hauteur désirée dans la virole, en ramenant le plateau en position horizontale en fin de mouvement.

Après avoir libéré la prise du fond, on retire ce plateau 24 de la virole, on fait pivoter la poutre 17 pour libérer cette virole, on déplace le chariot de soudage 37 pour l'amener au droit de ladite virole et on y fait descendre le fût 34. On soude ensuite en plusieurs points le fond à la virole, la soudure complète étant effectuée ultérieurement.

Pendant la soudure du fond à la virole, on met en place de manière analogue un autre fond dans une deuxième virole placée sur le plateau 4 reposant sur le bâti 1b.

La position d'un fond 32 dans une virole 14 doit être déterminée de manière précise de façon que le volume entre deux fonds successifs ait une valeur donnée.

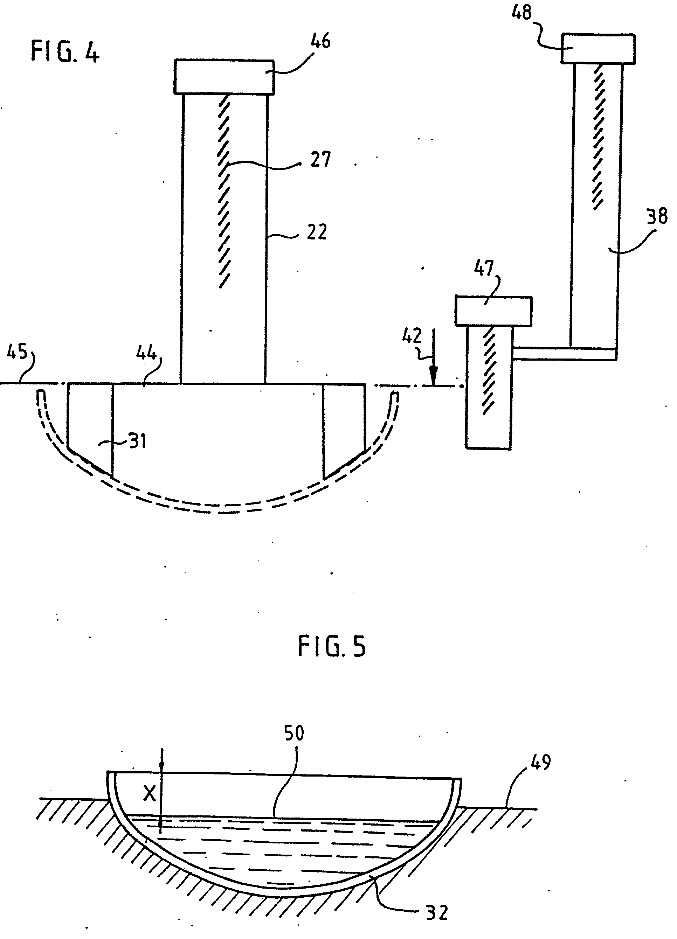

A cet effet, on met horizontal le plateau 24 et on le descend jusqu'à ce que la surface supérieure 44 de l'outillage d'emmanchement coïncide avec celle du plateau 4 qui est représentée au dessin par la référence 45. L'information est fournie à un codeur de commande 46 du moteur 29 et la position correspondante définit le zéro de la machine (Figure 4). De manière analogue, on descend la tête de soudage jusqu'à ce que son palpeur 42 soit au contact du plateau 4. L'information est fournie à des codeurs 47 et 48 et la tête de soudage occupe alors la position "zéro".

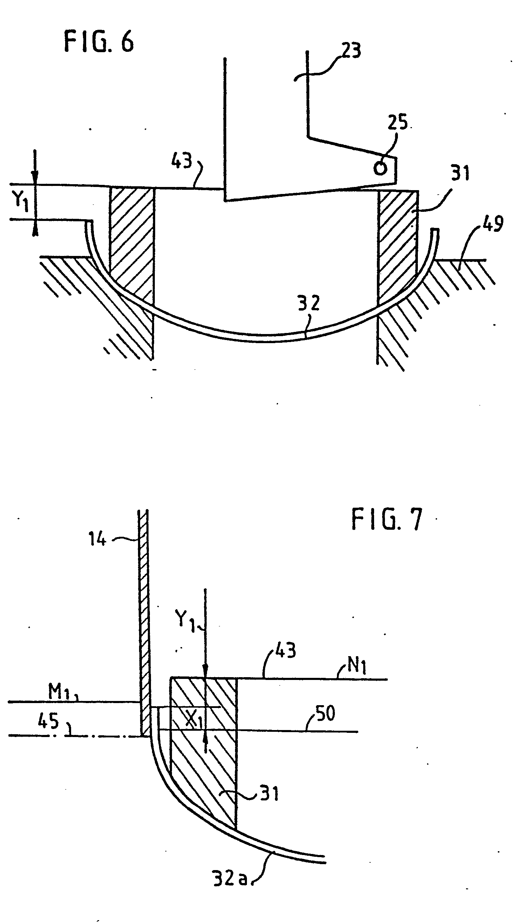

On procède ensuite au jaugeage du fond 32 à mettre en place. On le pose dans un support 49 à la forme et on le remplit d'un volume V donné d'eau, ce volume étant déterminé de manière que le niveau 50 se situe dans la zone où la partie ouverte du fond présente sensiblement la forme d'un cylindre (de section circulaire ou ovale suivant les cas), en général, ce volume est d'une centaine de litres (Figure 5). A l'aide des enclumes de référence 34, on mesure en plusieurs points la distance entre le niveau 50 et le bord supérieur du fond; on en fait la moyenne x.

Puis on presse l'outillage d'emmanchement 31 contre le fond 32 placé sur le support 49 et on mesure en plusieurs points la cote entre le bord supérieur du fond et la surface supérieure 43 de l'outillage d'emmanchement 31 (Figure 6); on en fait la moyenne y.

On répète ces opérations pour chacun des fonds et on obtient ainsi pour chacun d'eux des valeurs $X_1 Y_1, X_2 Y_2 ... X_n Y_n$.

On met alors en place le premier fond 32a dans la virole 14 en amenant le niveau 43 de l'outillage d'emmanchement à la cote: $N_1 = X_1 + Y_1 + a$, a étant une hauteur de sécurité égale par exemple à 5mm. (Figure 7). Dans la pratique cette cote est déterminée par un calculateur qui commande directement le moteur 19, le niveau 50 correspondant au volume V coïncide alors, à la distance a près, avec le niveau de référence 45.

On fixe le fond 32a à la virole 14 par quelques points de soudure. Avant chaque point le palpeur 42 détermine la cote $M_1$ du bord supérieur du fond où doit se faire la soudure. Cela permet de vérifier que le fond 32a a bien été positionné, de vérifier l'horizontalité du fond, et de prendre en compte les valeurs nécessaires à la détermination de la cote d'emmanchement du fond suivant 32b.

On met ensuite en place le second fond 32b en amenant le niveau 43 de l'outillage d'emmanchement à la cote:

$N_2 = M_1 - X_1 + h + X_2 + Y_2 + a$, h étant la distance correspondant au volume à enfermer entre les deux fonds 32a et 32b, c'est-à-dire étant égal au quotient de ce volume par la section de la virole 14 (Figure 8). On vérifie le niveau de soudage $M_2$ comme il a été indiqué précédemment et on soude le fond.

On opère de manière analogue pour les fonds suivants, en amenant à chaque fois le niveau 43 de l'outillage à la cote:

$N_n = M_{n-1} - x_{n-1} + h_n + X_n + Y_n + a$, $h_n$ étant la distance correspondant au volume à enfermer entre le enième fond et le fond précédent.

**Revendications**

1. Machine pour la mise en place et le soudage des fonds et brise-lames à l'intérieur d'une virole (14) d'un réservoir ou citerne, caractérisée en ce qu'elle comprend au moins un bâti (1a ou 1b) par rapport auquel est monté pivotant un support (3) pour un plateau tournant (4) muni de moyens de maintien (11) d'une virole (14) de façon à pouvoir occuper soit une position verticale, soit une position dans laquelle il est horizontal et repose sur le bâti, un dispositif d'emmanchement des fonds et brise-lames qui est mobile par rapport au bâti (1a ou 1b) et peut occuper soit une position située à la verticale du bâti, soit une position située à la verticale d'un emplacement de dépose dês fonds et brise-lames, ce dispositif comprenant un bâti auxiliaire (17) par rapport auquel est mobile verticalement un plateau d'emmanchement (24) portant des moyens de prise et d'emmanchement de fonds et brise-lames, et une installation de soudure des fonds et brise-lames qui est mobile par rapport au bâti (1a ou 1b) et peut occuper une position située à la verticale du bâti, cette installation comprenant un support (37) par rapport auquel est mobile verticalement une tête de soudure.

2. Machine selon la revendication 1, caractérisée en ce que le plateau d'emmanchement (24) est articulé autour d'un axe horizontal (25) sur un support (23) mobile verticalement par rapport au bâti (17) du dispositif d'emmanchement et en ce que la machine comporte un moteur tel qu'un vérin (26) propre à faire pivoter le plateau par rapport au support.

3. Machine selon la revendication 1 ou 2, caractérisée en ce qu'elle comporte deux bâtis (1a et 1b) à chacun desquels est associé un plateau tournant (4) et son support (3), et en ce que le dispositif d'emmanchement ainsi que l'installation de soudure sont disposés de manière à pouvoir être amenés à volonté à la verticale de l'un ou l'autre des bâtis.

4. Machine selon la revendication 3, caractérisée en ce que le dispositif d'emmanchement des fonds est porté par une poutre (17) qui est montée pivotante par rapport à un support fixe (15) autour d'un axe vertical équidistant des deux bâtis et de l'emplacement de dépose des fonds et brise-lames.

5. Machine selon la revendication 3 ou 4, caractérisée en ce que l'installation de soudure est montée mobile sur une poutre (36) s'étendant dans un plan vertical parallèle au plan des axes des bâtis (1a et 1b).

6. Procédé pour la mise en place et le soudage des fonds et brise-lames à l'aide de la machine selon l'une des revendications 1 â 5, caractérisé en ce que l'on choisit pour la machine un niveau de référence (45) avec lequel on fait coïncider initialement un niveau de référence (44) du plateau d'emmanchement, en ce que, pour chaque fond, on détermine d'une part une cote de jaugeage en plaçant dans le fond un volume déterminé de liquide et en mesurant l'écart moyen entre le niveau de liquide et le bord supérieur du fond, et une cote de forme en mesurant l'écart moyen entre le bord supérieur du fond et le niveau de référence du plateau d'enmanchement lorsque le fond est pressé contre lui, et en ce que l'on descend le plateau d'emmanchement de façon que la distance de son niveau de référence au niveau de référence de la machine corresponde au volume de liquide que doit délimiter le fond, compte tenu de la cote de jaugeage et de la cote de forme de ce fond.

**Patentansprüche**

1. Maschine zum Einbauen und Anschweißen von Böden und Wellenbrechern im Innenraum des Ringes eines Behälters oder einer Zisterne, dadurch gekennzeichnet, daß sie mindestens ein Grundgestell (1a oder 1b) aufweist, an welchem drehbar ein Auflager (3) für eine drehbare Platte (4) angeordnet ist, die mit Mitteln (11) versehen ist zum Festhalten eines Ringes (14) in der Weise, daß er eine vertikale Position einnehmen kann oder eine Position, in welcher er horizontal auf dem Grundgestell ruht sowie eine Einpreßvorrichtung für Böden und Wellenbrecher, die in Bezug auf das Grundgestell (1a oder 1b) bewegbar ist und eine Position vertikal zum Grundgestell oder eine Position vertikal zu einem Ablageplatz von Böden und Wellenbrechern einnehmen kann, wobei diese Einpreßvorrichtung ein Hilfsgestell (17) aufweist, in Bezug auf welches eine Einpreßplatte (24) in vertikaler Richtung bewegbar ist, die Mittel zum Aufnehmen und Einpressen von Böden und Wellenbrechern trägt, und eine Schweißeinrichtung zum Anschweißen der Böden und Wellenbrecher, welche in Bezug auf das Grundgestell (1a oder 1b) bewegbar ist und eine in der Vertikalen zum Grundgestell gelegene Position einnehmen kann, wobei diese Schweißeinrichtung einen Ständer (37) aufweist, in Bezug auf welchen ein Schweißkopf vertikal bewegbar ist.

2. Maschine nach Anspruch 1, dadurch gekennzeichnet, daß die Einpreßplatte (24) um eine horizontale Achse (25) schwenkbar an einem Ständer (23) angeordnet ist, welcher in Bezug auf das Hilfsgestell (17) der Einpreßvorrichtung vertikal bewegbar angeordnet ist, und daß die Maschine einen Motor sowie eine Winde (26) zum Drehen der Einpreßplatte in Bezug auf das Hilfsgestell aufweist.

3. Maschine nach Anspruch 1 oder 2, dadurch gekennzeichnet, daß sie zwei Grundgestelle (1a und 1b) aufweist, denen jeweils eine drehbare Platte (4) und ein Auflager (3) zugeordnet ist, und daß die Einpreßvorrichtung sowie die Schweißeinrichtung derart angeordnet sind, daß sie nach Belieben in die Vertikale des einen oder des anderen Grundgestells geführt werden können.

4. Maschine nach Anspruch 3, dadurch gekennzeichnet, daß die Einpreßvorrichtung für Böden von einem Träger (17) getragen ist, der in Bezug auf einen festen Ständer (15) drehbar um eine vertikale Achse angeordnet ist, welche äquidistant zu den beiden Grundgestellen und zum Ablageplatz der Böden und Wellenbrecher liegt.

5. Maschine nach den Ansprüchen 3 oder 4, dadurch gekennzeichnet, daß die Schweißeinrichtung bewegbar auf einem Träger (36) angeordnet ist, der sich in einer vertikalen Ebene erstreckt, welche parallel zur Ebene der Achsen der Grundgestelle (1a und 1b) angeordnet ist.

6. Verfahren zum Einbau und Anschweißen von Böden und Wellenbrechern mittels der Maschine nach einem der Ansprüche 1 bis 5, dadurch gekennzeichnet, daß man für die Maschine ein Bezugsniveau (45) wählt, mit dem man anfänglich ein Bezugsniveau (44) der Einpreßplatte zusammenfallen läßt, und daß man für jeden Boden einerseits eine Maßzahl zur Kalibrierung bestimmt, indem man in den Boden ein vorgegebenes Volumen einer Flüssigkeit einbringt und den mittleren Abstand zwischen der Flüssigkeitsoberfläche und dem oberen Rand des Bodens mißt, und andererseits eine Maßzahl für die Form bestimmt, indem man den mittleren Abstand zwischen dem oberen Rand des Bodens und dem Bezugsniveau der Einpreßplatte mißt, wenn der Boden an sie angepreßt ist, und daß man die Einpreßplatte derart absenkt, daß der Abstand ihres Bezugsniveaus vom Bezugsniveau der Maschine dem Flüssigkeitsvolumen entspricht, welches der Boden abgrenzen soll unter Berücksichtigung der Maßzahl zur Kalibrierung und der Maßzahl für die Form dieses Bodens.

## Claims

1. Machine for positioning and welding bottoms and breakwaters to the inside of a shell (14) of a reservoir or tank, characterized in that it comprises at least a frame (1a,1b) with respect to which is pivotally mounted a support (3) for a rotary plate (4) having means (11) for holding a shell (14) so as to be able to occupy either a vertical position or a position in which it is horizontal and rests on the frame, a device for fitting bottoms and breakwaters which is movable with respect to the frame (1a,1b) and may occupy either a position situated vertically above the frame or a position situated vertically above a location for depositing bottoms and breakwaters, this device comprising an auxiliary frame (17) with respect to which is vertically movable a fitting plate (24) having means for taking up and fitting bottoms and breakwaters, and an installation for welding the bottoms and breakwaters which is movable with respect to the frame (1a or 1b) and may occupy a position situated vertically above the frame, this installation comprising a support (37) with respect to which a welding head is movable vertically.

2. Machine according to claim 1, characterized in that the fitting plate (24) is pivotally mounted about a horizontal shaft (25) on a support (23) movable vertically with respect to the frame (17) of the fitting device and in that the machine comprisws a motor such as a cylinder (26) adapted for causing the plate to pivot with respect to the support.

3. Machine according to claim 1 or 2 characterized in that it comprises two frames (1a and 1b) with each of which is associated a rotary plate (4) and its support (3), and in that the fitting device as well as the welding installation are disposed so as to be able to be brought at will vertically above one or other of the frames.

4. Machine according to claim 3, characterized in that the device for fitting the bottoms is carried by a beam (17) which is mounted pivoting with respect to a fixed support (15) about a vertical shaft equidistant from the two frames and from the location for depositing bottoms and breakwaters.

5. Machine according to claim 3 or 4, characterized in that the welding installation is mounted for moving on a beam (36) extending in a vertical plane parallel to the plane of the axes of the frames (1a 1b).

6. Method for positioning and welding bottoms and breakwaters by means of the machine according to one of claims 1 to 5, characterized in that a reference level (45) is chosen for the machine with which a reference level (44) of the fitting plate is caused to coincide initially, in that, for each bottom, on the one hand a capacity rating is determined by placing in the bottom a given volume of liquid and measuring the mean difference between the level of liquid and the upper edge of the bottom and a form rating by measuring the mean difference between the upper edge of the bottom and the reference level of the fitting plate when the bottom is pressed thereagainst and in that the fitting plate is lowered so that the distance from its reference level to the reference level of the machine corresponds to the volume of liquid which the bottom is to define, taking into account the capacity rating and form rating of this bottom.

# FIG. 1

FIG. 2

FIG. 8

37
36
35
38

43

14

12
11
10

6
5
9

4

2  1b  3  8  7

3

h

M₂

$Y_2$

$X_2$

43

32b

14

$X_1$

$M_1$

50

45

32a

0111428

FIG. 3

32

34

33

2a

2b

16

17

40

38

36

37

43

35

35

5

5

0 111 428

5

FIG. 4

47

48

42

46

27

22

38

45

44

31

FIG. 5

50

49

X

32

FIG. 6

FIG. 7